# EUROPEAN PATENT APPLICATION

(11) **EP 2 213 541 A1**
(43) Date of publication of application: **04.08.2010**
(21) Application number: 08855203.9
(22) Date of filing: 26.11.2008
(51) Int. Cl.: B60W 10/18, B60K 6/48, B60K 6/547, B60L 7/14, B60T 8/17, B60W 10/10, B60W 20/00, F16H 61/04, F16H 63/48, F16H 61/682

(54) **DECELERATION CONTROLLER FOR HYBRID ELECTRIC VEHICLE**

(30) Priority: 30.11.2007 JP 2007310096
(71) Applicant: Mitsubishi Fuso Truck and Bus Corporation, Kawasaki-shi Kanagawa 212-0058 (JP)
(72) Inventor: OHKUBO, Go, Kawasaki-shi Kanagawa 212-0058 (JP); KISHIKAWA, Masatoshi, Kawasaki-shi Kanagawa 212-0058 (JP)
(74) Representative: advotec.
(86) International application number: PCT/JP2008/071423
(87) International publication number: WO 2009/069642

(57) **Abstract**

A deceleration control apparatus for a hybrid electric vehicle in which an electric motor conducts regenerative braking when the vehicle is to be decelerated comprises a braking unit for applying a braking force on a drive member transmitting drive power converted by a parallel axes-type automatic transmission to wheels, and a control unit for controlling the braking unit to apply a braking force on the drive member while a downshift is being conducted in the automatic transmission in the process of deceleration of the vehicle.

## Description

### Technical Field

This invention relates to a deceleration control apparatus for a hybrid electric vehicle equipped with an automatic transmission.

### Background Art

Like common vehicles using only an engine as a drive source, most hybrid electric vehicles using an engine and an electric motor as drive sources have been equipped with an automatic transmission. In the hybrid electric vehicle equipped with an automatic transmission, the gear is determined depending on the depression amount of an accelerator pedal and running conditions such as a vehicle speed, for example by referring to a shift map prepared in advance. If it is determined that a gear shift is required for the gear ratio determined, a downshift or upshift is conducted in the automatic transmission.

For large-sized vehicles such as trucks and busses in particular, a mechanical-type automatic transmission, which is a parallel axes-type transmission with an actuator incorporated, is used, since use of a planetary gear-type automatic transmission similar to that used in common passenger cars but increased in size leads to an increase in costs. A hybrid electric vehicle equipped with such mechanical-type automatic transmission is disclosed in Unexamined Japanese Patent Publication 2003-252072, for example. The mechanical-type automatic transmission has plural sets of gear wheels providing different gears, and drive power is transmitted via a set of gear wheels selected from the sets.

In the hybrid electric vehicle, for example while the driver has the vehicle coasting without depressing the accelerator pedal, drive power is transmitted from drive wheels to an electric motor via drive members such as drive shafts, a propeller shaft, an output shaft of the automatic transmission, etc. The electric motor generates regenerative electric power by using the transmitted drive power, and the regenerative electric power is stored in a battery. By generating the regenerative electric power in this manner, the electric motor applies regenerative braking on the vehicle, so that the vehicle decelerates as if an engine brake were acting on the vehicle.

In the vehicle equipped with the above-mentioned mechanical-type automatic transmission, when determining on the basis of the shift map that a downshift is required as a result of reduction in vehicle speed, a conventional transmission controller shift the transmission from a first state in which a set of gear wheels corresponding to the gear selected before the downshift is used for speed change to a second state in which other set of gear wheels corresponding to the gear selected after the downshift is used for speed change. While the shift from the first state to the second state is being conducted (or in other words, during the gear shift), the transmission once comes into a neutral state. If a set of gear wheels has been used for speed change in the transmission, the vehicle is decelerated by regenerative braking force produced by the electric motor, as described above. During the gear shift, however, the transmission once comes into the neutral state, and thereby the vehicle is not decelerated by the regenerative braking force. Consequently, the vehicle comes into a coasting state at this time.

Thus, in downshifting, the vehicle transits from deceleration by braking force obtained with the gear selected before the downshift, to the coasting state, and then to deceleration by braking force obtained with the gear selected after the downshift, and therefore, experiences interruption of torque transmission. This causes a problem that in downshifting, the driver has a strong feeling of strangeness, because of such interruption of torque transmission.

As stated above, the hybrid electric vehicle is decelerated by regenerative braking force produced by the electric motor, where the rate of deceleration varies depending on the vehicle running conditions such as a vehicle speed. Accordingly, the feeling of strangeness caused by interruption of torque transmission during downshifting is not the same. The lower rate of deceleration the vehicle was undergoing before a downshift, the less the driver feels the strangeness. The higher rate of deceleration the vehicle was undergoing before a downshift, the more the driver feels the strangeness. Further, according to the circumstances, the vehicle may use both engine braking by the engine and regenerative braking by the electric motor. In such case, interruption of torque transmission causes a further stronger feeling of strangeness.

### Disclosure of the Invention

The present invention has been made to solve the problem as mentioned above. An object of the present invention is to provide a deceleration control apparatus for a hybrid electric vehicle capable of providing an improved feeling of driving during downshifting.

In order to achieve the above object, the present invention provides a deceleration control apparatus for a hybrid electric vehicle having an engine; an electric motor acting as a motor by being supplied with electric power from a battery; and a parallel axes-type automatic transmission for transmitting drive power from the engine and/or the electric motor, converted by using a set of gear wheels corresponding to a selected gear, to drive wheels via a drive member, the electric motor being capable of acting as a generator to conduct regenerating braking and store generated electric power in the battery when the vehicle is to be decelerated, the deceleration control apparatus comprising: a braking unit for applying a braking force on the drive member; and a control unit for controlling the braking unit to apply a braking force on the drive member while a downshift is being conducted in the automatic transmission in the process of deceleration of the vehicle.

In the case of the deceleration control apparatus for the hybrid electric vehicle structured as described above, when the vehicle is to be decelerated, the electric motor acts as a generator to produce a regenerative force. If, in the process of deceleration, a downshift is being conducted in the parallel axes-type automatic transmission, the control unit controls the braking unit to apply a braking force on the drive member. This satisfactorily prevents a feeling of strangeness which is otherwise caused by interruption of torque transmission in downshifting in the process of deceleration.

Preferably, in the deceleration control apparatus for a hybrid electric vehicle, while a downshift is being conducted in the automatic transmission, the control unit may control the braking unit to apply a braking force on the drive member to decelerate the vehicle at a lower rate than the vehicle is decelerated after the downshift.

When the control unit controls the braking unit in this manner, the drive member receives an appropriate magnitude of braking force while downshift is being conducted in the process of deceleration, which leads to improved drivability.

In the above-described deceleration control apparatus for a hybrid electric vehicle, the braking unit may be, for example a parking brake incorporated in the automatic transmission in order to apply a braking force on the drive member when the vehicle is to be parked.

Since the parking brake originally incorporated in the automatic transmission can be used as the braking unit of the present invention, it is not necessary to add another braking unit for the present invention. This curbs an increase in overall size of the deceleration control apparatus and an increase in costs as well.

In the above-described deceleration control apparatus for a hybrid electric vehicle, the vehicle may be a truck, for example.

In this case, even if the vehicle, which is a truck, is carrying a heavy load so that the gross vehicle weight is great, the present invention prevents a feeling of strangeness caused by the vehicle's transiently traveling with no braking force applied during downshifting in the process of deceleration. This leads to improved safety of the vehicle.

### Brief Description of the Drawings

FIG. 1 is a diagram showing a system structure of a deceleration control apparatus for a hybrid electric vehicle according to one embodiment of the present invention; and
FIG. 2 is a time chart showing how constituent parts of the deceleration control apparatus shown in FIG. 1 operate.

### Best Mode of Carrying out the Invention

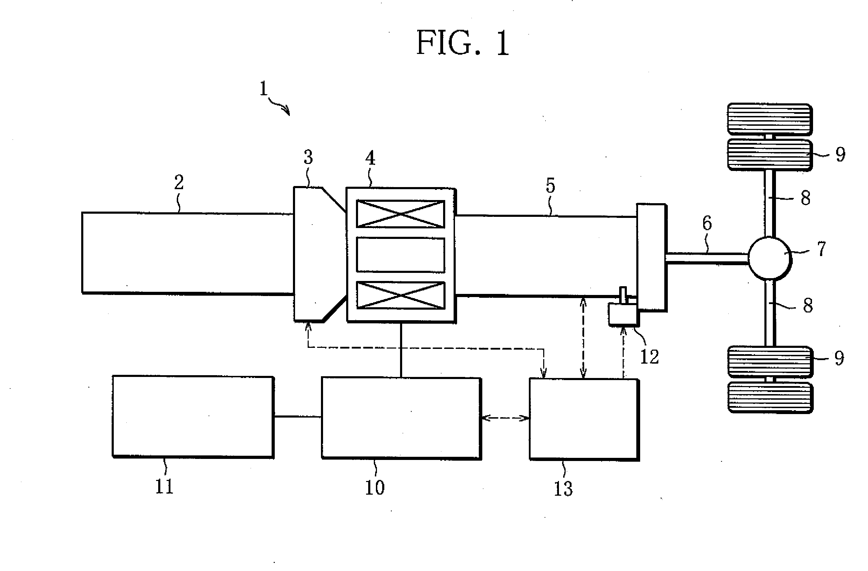

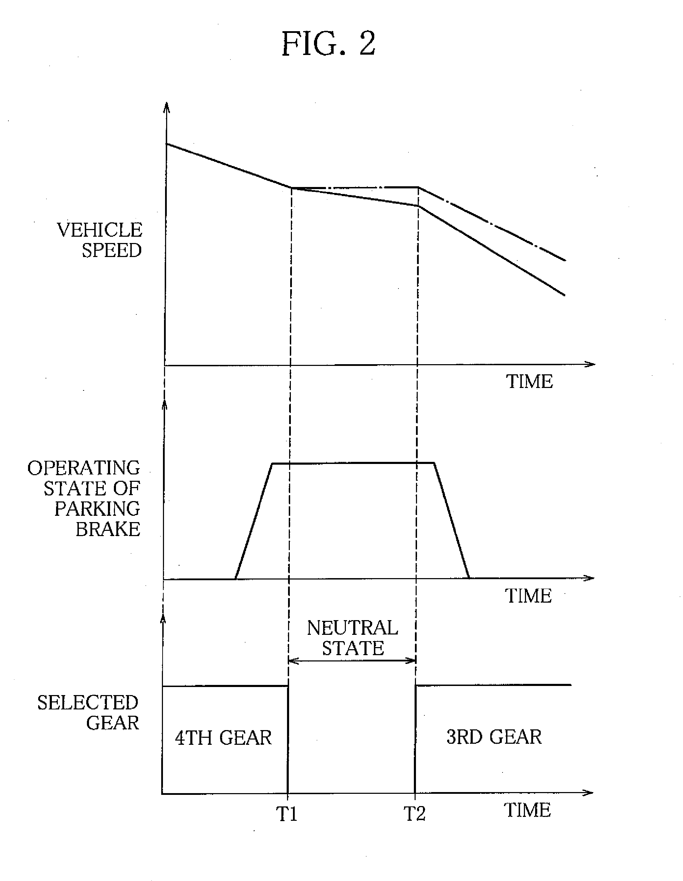

Referring to the drawings, a deceleration control apparatus for a hybrid electric vehicle according to one embodiment of the present invention will be described below. FIG. 1 is a diagram showing a system configuration of the deceleration control apparatus for a hybrid electric vehicle according to the present embodiment, and FIG. 2 is a time chart showing how constituent parts of the deceleration control apparatus shown in FIG. 1 operate.

As shown in FIG. 1, a hybrid electric vehicle 1, which is for example a truck, has an engine 2 and an electric motor 4 as power sources to make the vehicle run. A clutch 3 is arranged to the output side of the engine 2, an electric motor 4 to the output side of the clutch 3, and an automatic transmission 5 to the output side of the electric motor 4. Consequently, drive power is transmitted from either or both of the engine 2 and the electric motor 4 to the automatic transmission 5, depending on the running condition of the vehicle and the driver's operation. Power transmission between the engine 2 and the electric motor 4 can be interrupted by the clutch 3.

The automatic transmission 5 is a mechanical-type automatic transmission which is a parallel axes-type transmission with actuators (not shown) incorporated, commonly used in large-sized vehicles such as trucks and busses. Specifically, the automatic transmission 5 has plural sets of gear wheels that are engaged correspondingly to respective gears for speed change, and power is transmitted via a set of gear wheels selected from these sets.

In shifting gears in the automatic transmission 5, first the clutch 3 is disengaged and the use of the gear wheels corresponding to the currently selected gear is cancelled. Then, the gear wheels corresponding to the gear selected after the gear shift is used, and then the clutch 3 is engaged again, by which the gear shift in the automatic transmission 5 is completed.

Drive power is outputted from an output shaft (not shown) of the automatic transmission 5 and transmitted to left and right drive wheels 9 via a propeller shaft 6, a differential gear unit 7 and drive shafts 8. These elements from the automatic transmission 5 to the left and right drive wheels 9 are drive members.

The electric motor 4 is electrically connected to a battery 11 with an inverter 10 interposed between. When the hybrid electric vehicle 1 is to run on power generated by the electric motor 4, electric power is supplied to the electric motor 4 from the battery 11 via the inverter 11 to make the electric motor 4 act as a motor. The drive power generated by the electric motor 4 is transmitted to the automatic transmission 5. The drive power is then transmitted from the automatic transmission 5, via a selected set of gears wheels, to the left and right drive wheels 4 as mentioned above.

While, on the other hand, the driver has the hybrid electric vehicle 1 coasting without depressing an accelerator pedal (not shown) or has the hybrid electric vehicle 1 decelerating by depressing a brake pedal, the electric motor 4 is made to act as a generator to generate regenerative electric power. The regenerative electric power generated in this way is stored in the battery 11, via the inverter 11. A regenerative braking force produced by the electric motor 4 acting as a generator is applied on the hybrid electric vehicle 1, so that the hybrid electric vehicle 1 decelerates. In some cases, during such deceleration, the clutch 3 is engaged to apply an engine braking force produced by the engine 2 on the hybrid electric vehicle 1, so that the hybrid electric vehicle 1 is strongly decelerated by engine braking force produced by the engine 2 and regenerative braking force produced by the electric motor 4.

In the present embodiment, the automatic transmission 5 also has a parking brake (braking unit) 12 provided to brake the output shaft of the automatic transmission 5 when parking the hybrid electric vehicle 1. The parking brake 12 is not a type relying on gear engagement; it comprises, for example, a pair of friction plates, one being connected to the output shaft of the automatic transmission 5 and the other to a stationary member such as a casing of the automatic transmission 5. The parking brake 12 is arranged such that the braking force applied on the output shaft of the automatic transmission 5 can be continuously varied by an actuator (not shown) regulating the degree to which the friction plates are engaged. In the present embodiment, the actuator of the parking brake 12 can be activated, for example by using negative pressure in a vacuum tank originally provided to activate an exhaust brake (not shown).

The parking brake 12 of the present embodiment may be replaced with braking devices such as common disc brakes or drum brakes, provided for the left and right drive wheels 9, respectively. Further, the braking unit of the present invention may be a device provided to brake any of the drive members such as the propeller shaft 6, the differential gear unit 7, the drive shafts 8, etc.

In the present embodiment, the inverter 7, the clutch 3, the automatic transmission 5 and the parking brake 12 are controlled by an electronic control unit (control unit) 13.

Next, referring to the time chart in FIG. 2, how constituent parts of the deceleration control apparatus in the present embodiment operate will be described in detail. FIG. 2 shows how the vehicle speed varies when a downshift from the 4th gear to the 3rd gear is conducted in the automatic transmission 5 while the driver has the hybrid electric vehicle 1 coasting with the accelerator pedal released, where an example for the present invention is shown in solid line, and an example for a conventional device is shown in dot-dash line as a comparative example. FIG. 2 also shows how the parking brake 12 operates.

While the 4th gear is being used and the accelerator pedal is not depressed, regenerative electric power generated by the electric motor 4 is stored in the battery 11 as mentioned above. In this case, as shown in solid line in FIG. 2, the vehicle speed continues reducing gradually up to time T1, due to regenerative braking force produced by the electric motor 4. When the vehicle speed has reduced to a level requiring a downshift to the 3rd gear, the gear shift process starts.

In this process, first the electronic control unit 13 disengages the clutch 3, and then cancel the use of the set of gear wheels corresponding to the 4th gear at time T1, whereby the automatic transmission 5 is placed in a neutral state.

In the case of the conventional device which just cancel the use of the gear wheels corresponding to the 4th gear in the automatic transmission 5, the hybrid electric vehicle 1 travels with no braking force applied, so that the vehicle speed remains at the substantially same level after time T1 as shown in dot-dash line in FIG. 2.

In the present embodiment, by contrast, the electronic control unit 13 activates the parking brake 12 to gently reduce the vehicle speed while the automatic transmission is in the neutral state in the gear change process. Consequently, in the present embodiment, the vehicle speed continues reducing gradually also after time T1, as shown in solid line in FIG. 2.

It is to be noted that too great a braking force applied by the parking brake 12 may decelerate the hybrid electric vehicle 1 at a rate higher than the rate at which the vehicle is decelerated with the 3rd gear selected. In such case, the deceleration varies from a lower rate to a higher rate and then to a lower rate in the process of the gear shift from the 4th gear to the 3rd gear, which degrades drivability contrary to the purpose. Consequently, in the present embodiment, the braking force applied by the parking brake 12 is set to a level causing deceleration at a rate lower than the rate of deceleration after the 3rd gear is selected.

Subsequently, when the selection of the gear set corresponding to the 3rd gear is completed at time T2, which means that the automatic transmission 5 is no longer in the neutral state, the electric control unit 13 stops the parking brake 12 applying the braking force.

Incidentally, when the hybrid electric vehicle 1 is a truck and carrying a heavy load, it is necessary to arrange that the parking brake 12 applies so great a braking force that can brake the hybrid electric vehicle 1 as desired during the gear shift.

In the present embodiment structured as described above, if a downshift is conducted in the automatic transmission 5 while the hybrid electric vehicle 1 is being decelerated by the regenerative braking force produced by the electric motor 4, the electronic control unit 13 controls the parking brake 12 to apply a baking force on a drive member when the automatic transmission 5 comes into the neutral state. This satisfactorily prevents the hybrid electric vehicle 1 from giving a strong feeling of strangeness by interruption of torque transmission during downshifting.

While the automatic transmission 5 is in the neutral state in the gear shift process, the electronic control unit 13 controls the parking brake 12 to apply a braking force to decelerate the vehicle at a lower rate than the vehicle is decelerated after the downshift. This prevents the vehicle from receiving too great a braking force while the automatic transmission 5 is in the neutral state, and thus provides improved drivability.

Further, since the parking brake 12 originally incorporated in the automatic transmission 5 is used as the braking unit of the present invention, there is no need to add another braking unit. This curbs an increase in overall size of the deceleration control apparatus and an increase in costs as well.

Even if the hybrid electric vehicle 1 is a truck carrying a heavy load so that the gross vehicle weight is great, the present invention can prevent a feeling of strangeness caused by the vehicle's transiently traveling with no braking force applied during a gear shift. This leads to improved safety of the vehicle.

Further, application of a braking force on a drive unit during a gear shift also prevents the automatic transmission 5 and the differential 7 from shaking due to backlash between gear wheels, etc. during the gear shift, and thus gives a more agreeable feeling of deceleration.

In the above, the embodiment has been described taking downshift from the 4th gear to the 3rd gear for example. In the present embodiment, however, the electronic control unit 13 controls the parking brake 12 in the same way also in downshift to another lower gear in the process of deceleration of the vehicle, and produces the same effect in the downshift to another lower gear.

## Claims

1. A deceleration control apparatus for a hybrid electric vehicle having an engine; an electric motor acting as a motor by being supplied with electric power from a battery; and a parallel axes-type automatic transmission for transmitting drive power from the engine and/or the electric motor, converted by using a set of gear wheels corresponding to a selected gear, to drive wheels via a drive member, the electric motor being capable of acting as a generator to conduct regenerative braking and store generated electric power in the battery when the vehicle is to be decelerated,
the deceleration control apparatus comprising:
a braking unit for applying a braking force on the drive member; and
a control unit for controlling the braking unit to apply a braking force on the drive member while a downshift is being conducted in the automatic transmission in the process of deceleration of the vehicle.

2. The deceleration control apparatus for a hybrid electric vehicle according to claim 1, wherein while a downshift is being conducted in the automatic transmission, said control unit controls said braking unit to apply a braking force on said drive member to decelerate the vehicle at a lower rate than the vehicle is decelerated after the downshift.

3. The deceleration control apparatus for a hybrid electric vehicle according to claim 1, wherein said brake unit is a parking brake incorporated in the automatic transmission in order to apply a braking force on said drive member when the vehicle is to be parked.

4. The deceleration control apparatus for a hybrid electric vehicle according to claim 1, wherein said hybrid electric vehicle is a truck.
